# DEMANDE DE BREVET EUROPEEN

(11) **EP 0 723 354 A1**
(43) Date de publication de la demande: **24.07.1996**
(21) Numéro de dépôt: 96400083.0
(22) Date de dépôt: 12.01.1996
(51) Int. Cl.: H04L 27/227

(54) **Génération de porteuses pour démodulation en quadrature**

(30) Priorité: 17.01.1995 FR 9500452
(71) Demandeur: ALCATEL BUSINESS SYSTEMS, F-75008 Paris (FR)
(72) Inventeur: Thomas, Gérard, F-95610 Eragny sur Oise (FR); Brignol, Luc, F-75011 Paris (FR); Christien, Florence, F-75017 Paris (FR)
(74) Mandataire: Schaub, Bernard

(57) **Abrégé**

Le dispositif (1) génère deux porteuses de réception en quadrature de phase (PR0, PR1).

Il comprend:
- des moyens de déphasage (13) générant une pluralité de signaux déphasés (14) à partir du signal reçu (8);
- des moyens (15) de sélection d'un signal en fonction, soit d'un état de phase prédéterminé (17) associé à un symbole d'initialisation, pendant la réception de ce symbole, soit d'un état de phase estimé (10) par un étage de démodulation à partir du signal reçu (8), pendant la réception des symboles utiles, de façon que le signal sélectionné(16) constitue une porteuse de réception, dite de référence (PR1) ;
- des moyens (18) de stockage et de restitution du signal sélectionné, après environ une durée symbole, délivrant la porteuse de référence;
- des seconds moyens (19) de déphasage générant une seconde porteuse de réception (PR0), à partir de la porteuse de référence.

## Description

Le domaine de l'invention est celui de la démodulation de phase (MDP) à au moins deux états de phase, ainsi que celui de la démodulation d'amplitude en quadrature (MAQ) à au moins deux états d'amplitude-phase.

Plus précisément, l'invention concerne un dispositif et un procédé de génération de deux porteuses de réception nécessaires à la réalisation de telles démodulations. Ces deux porteuses de réception, qui possèdent une même fréquence et sont en quadrature de phase l'une par rapport à l'autre, sont généralement appelées porteuse de réception directe et porteuse de réception en quadrature.

A l'émission, un signal modulé est constitué d'une série de symboles choisis parmi les M symboles possibles correspondant aux M états de modulation possibles (états de phase pour une MDP et états d'amplitude-phase pour une MAQ). Chacun des M symboles possibles Sₖ, k ∈ [1, M], est obtenu en additionnant, pendant une durée prédéterminée, dite durée symbole Ts (ou temps-baud), deux porteuses d'émission PE0, PE1 (de même fréquence et en quadrature de phase l'une par rapport à l'autre) modulées en amplitude (modulation produit). Ceci s'exprime par la relation Sₖ = aₖ.PE0 + bₖ.PE1. Chaque symbole possible peut donc être associé à un couple de niveaux d'amplitude (aₖ, bₖ) représentant les coordonnées d'un point dans un repère dont chacun des vecteurs de base est une des deux porteuses d'émission PE0, PE1.

A la réception, le signal reçu est démodulé. Pour cela, il est multiplié d'une part par une porteuse de réception directe PR0 et d'autre part par une porteuse de réception en quadrature PR1. Les produits obtenus en sortie des multiplieurs sont filtrés (filtrage passe-bas) puis comparés à des seuils prédéterminés. Les résultats de ces comparaisons sont fournis d'une part à un module de décision, qui en déduit un état de modulation estimé correspondant au signal reçu, et d'autre part à un module de récupération de rythme, qui génère un signal d'horloge (ou rythme) de période égale à la durée symbole Ts. Enfin, la sortie du module de décision est échantillonnée aux instants n.Ts, de façon à générer une série de symboles reçus.

Il ressort de ce qui précède qu'une démodulation correcte impose :
- la récupération des deux porteuses de réception PR0, PR1 qui doivent être en synchronisme et en phase avec les porteuses d'émission PE0, PE1 ;
- la récupération du rythme de démodulation, c'est-à-dire la connaissance des instants n.Ts de transition entre les symboles du signal reçu.

Dans les systèmes de démodulation connus, un oscillateur local génère la porteuse de réception directe PR0, et un déphaseur de π/2 permet de générer par retard la porteuse de réception en quadrature PR1.

Ces systèmes connus présentent l'inconvénient majeur de nécessiter deux boucles de synchronisation : l'une pour la porteuse de réception directe (afin d'agir sur la fréquence et la phase de l'oscillateur local), et l'autre pour le rythme de démodulation (afin d'agir sur les instants d'échantillonnage de la sortie du module de décision).

La mise en oeuvre de ces deux boucles de synchronisation est souvent complexe et délicate et fait généralement appel à des circuits processeurs de signaux numérique (DSP) qui, malgré leur grande vitesse d'exécution ne peuvent pas traiter des signaux de fréquences élevées (telles que des fréquences de porteuse de l'ordre de plusieurs centaines de MHz). De plus, elle nécessite la présence, au début de la série de symboles émis, d'une séquence d'initialisation relativement longue (et connue du récepteur) afin de permettre la convergence des deux boucles qui sont généralement imbriquées. En effet, le rythme de démodulation est tiré d'un oeil de démodulation obtenu grâce à la porteuse de réception directe. Or pour assurer la convergence de la boucle de synchronisation de la porteuse, il faut valider des informations d'avance ou de retard de porteuse par la connaissance du rythme de démodulation.

Les systèmes de démodulation connus demandent donc des temps de synchronisation importants devant la vitesse de transmission. En d'autres termes, les systèmes connus nécessitent des séquences d'initialisation (ou apprentissage) comprenant un nombre relativement important de symboles.

Ces systèmes de démodulation connus ne peuvent donc pas être utilisés en mode paquet (ou burst en anglais) ou mode alternatif. En effet, dans un tel mode, chacun des paquets transmis successivement doit être synchronisé (récupération des porteuses de réception et du rythme de démodulation). Or, le nombre de symboles que peut contenir un paquet étant limité, si la séquence d'initialisation correspond à un nombre important de symboles, le paquet ne peut transporter qu'un trop faible nombre de symboles utiles.

L'invention a notamment pour objectif de pallier ces différents inconvénients de l'état de la technique.

Plus précisément, l'un des objectifs de la présente invention est de fournir un dispositif de génération de deux porteuses de réception qui ne nécessite pas d'oscillateur local, ni de boucle de synchronisation.

Un autre objectif de l'invention est de fournir un tel dispositif qui permette une très grande vitesse de synchronisation du signal reçu et s'applique donc à des transmissions à très haut débit (plusieurs dizaines de Mbit/s) utilisant des porteuses de fréquences élevées (plusieurs centaines de MHz).

L'invention a également pour objectif de fournir un tel dispositif qui permette une démodulation dans un système de transmission exploité en mode paquet.

Ces différents objectifs, ainsi que d'autres qui apparaîtront par la suite, sont atteints selon l'invention à l'aide d'un dispositif de génération de deux porteuses de réception possédant une même fréquence, dite fréquence porteuse fₚ = 1/Tₚ, et en quadrature de phase l'une par rapport à l'autre, ledit dispositif étant destiné à être intégré dans un étage de démodulation d'un signal reçu modulé selon une modulation de phase à au moins deux états de phase, ledit signal reçu transportant au moins une série de symboles constituée d'une séquence d'initialisation d'au moins un symbole d'initialisation et d'une séquence utile d'au moins un symbole utile, chaque symbole correspondant à un desdits états de phase,
ladite séquence d'initialisation étant connue dudit dispositif, et le dispositif comprenant :
- des premiers moyens de déphasage générant, à partir dudit signal reçu, une pluralité de signaux déphasés présentant chacun un déphasage distinct par rapport audit signal reçu ;
- des moyens de sélection d'un signal, dit signal sélectionné, parmi ladite pluralité, en fonction :
   -- soit d'un état de phase prédéterminé associé audit symbole d'initialisation, pendant la réception de ladite séquence d'initialisation,
   -- soit d'un état de phase estimé par ledit étage de démodulation à partir du signal reçu, pendant la réception de ladite séquence utile,
   de façon que ledit signal sélectionné constitue l'une desdites porteuses de réception, dite porteuse de référence ;
- des moyens de stockage et de restitution du signal sélectionné, après un retard sensiblement égal à une durée symbole, de façon à délivrer ladite porteuse de référence ;
- des seconds moyens de déphasage générant, à partir de ladite porteuse de référence, l'autre desdites prteuses de réception.

L'expression "modulation de phase à au moins deux états de phase" doit être comprise de façon très large, c'est-à-dire comme englobant les MDP proprement dites et les MAQ. En effet, on considère ici que les MAQ, pour lesquelles on parle d'état d'amplitude-phase au lieu d'état de phase, sont des cas particuliers de modulation de phase combinée à une modulation d'amplitude.

Le principe de l'invention consiste donc, pendant chaque durée symbole, à extraire du signal reçu deux porteuses de réception présentes de façon implicite dans ce signal reçu, et à utiliser ces deux porteuses de réception extraites pour la démodulation du signal reçu pendant la durée symbole suivante.

En d'autres termes, chaque portion de signal reçue pendant une durée symbole est :
- d'une part démodulée grâce à deux porteuses de réception extraites de la portion de signal reçue pendant la durée symbole précédente, de façon à fournir un symbole estimé,
- d'autre part traitée (en fonction du symbole estimé) puis stockée, de façon à fournir deux porteuses de réception permettant la démodulation de la portion de signal reçue pendant la durée symbole suivante.

Le traitement d'une portion de signal reçu en fonction d'un symbole estimé correspondant consiste à déphaser cette portion de signal reçu de façon à obtenir une des porteuses de réception, dite porteuse de référence (l'autre porteuse de réception étant déduite de cette porteuse de référence).

Chacun des symboles possibles est associé à un des états de phase possibles, auquel correspond un écart de phase connu par rapport aux porteuses de réception. Par conséquent, si l'on sait déterminer à quel symbole correspond une portion de signal reçu, on sait quel déphasage appliquer à cette portion de signal reçu pour obtenir une des porteuses de réception.

A l'initialisation de la transmission, afin que le dispositif sache quel traitement appliquer à la portion de signal reçue pendant la première durée symbole, le premier symbole transmis (ou symbole d'initialisation) est connu du dispositif.

La portion de signal reçue pendant la première durée symbole n'est pas destinée à être démodulée (puisqu'on ne dispose pas dans ce cas de porteuses de réception extraites d'une portion de signal reçue précédemment) mais uniquement à être stockée, après traitement, pour fournir les deux porteuses de réception nécessaires à la démodulation de la portion de signal reçue pendant la durée symbole suivante.

A partir de la seconde durée symbole, le dispositif n'a plus besoin d'aucune information prédéterminée. En effet, pour chaque portion du signal reçu, il dispose de deux porteuses de réception permettant d'effectuer une démodulation fournissant un symbole estimé, ce symbole estimé permettant le choix du traitement à appliquer à la portion de signal reçu afin d'obtenir les deux porteuses de réception utiles pendant la durée symbole suivante.

Ainsi, selon l'invention, la séquence d'initialisation peut comporter un seul symbole. Par conséquent, la vitesse de synchronisation peut être très grande.

En particulier, l'invention est parfaitement adaptée aux transmissions en mode paquet (ou mode alternat) dans lesquels le signal reçu comporte plusieurs séries (appelées paquets) successives de symboles, chaque paquet devant être synchronisé. En effet, grâce à l'invention, chaque paquet peut ne comporter qu'un seul symbole d'initialisation, tous les autres symboles pouvant être utilisés pour transporter des données utiles.

Par ailleurs, le dispositif de l'invention ne nécessite pas d'oscillateur local, ni de boucle de synchronisation visant à corriger la fréquence et la phase de l'oscillateur local.

Le dispositif de l'invention est donc beaucoup moins complexe et plus facile à mettre en oeuvre que les dispositifs connus comprenant généralement un oscillateur local et un oscillateur contrôlé en tension VCXO.

L'invention peut notamment s'appliquer à des transmissions à haut débit (plusieurs dizaines de Mbit/s) dont les porteuses de réception présentent des fréquences élevées (plusieurs centaines de MHZ).

Il est clair que le principe de l'invention peut être mis en oeuvre aussi bien avec des composants de type analogique qu'avec des composant de type numérique.

Avantageusement, ledit déphasage distinct que présente chaque signal déphasé par rapport au signal reçu est égal au déphasage entre un desdits états de phase possibles et ladite porteuse de référence.

Dans un mode de réalisation particulier de l'invention, lesdits premiers moyens de déphasage comprennent une première ligne à retard analogique du type à onde de surface, présentant une entrée et une pluralité de paires d'électrodes de sorties délivrant ladite pluralité de signaux déphasés, chaque paire d'électrodes de sortie délivrant un desdits signaux déphasés présentant un déphasage fonction de la distance entre ladite entrée et lesdites électrodes.

De cette façon, les différents déphasages appliqués au signal reçu en cours de démodulation sont facilement mis en oeuvre.

A chaque paire d'électrodes de sortie correspond un pas de retard (ou de déphasage) dont la valeur est égale à une fraction de la période de la porteuse de référence (la période de la porteuse de référence correspondant à un déphasage de 2p).

Dans un mode de réalisation avantageux de l'invention, ladite modulation de phase étant combinée à une modulation d'amplitude, de façon à constituer une modulation d'amplitude en quadrature possédant une pluralité d'états d'amplitude-phase possibles, ledit dispositif comprend des moyens de pondération de chacun des signaux déphasés générés par les premiers moyens de déphasage, de façon que ledit signal sélectionné présente une amplitude sensiblement constante dans le temps, quels que soient les signaux déphasés successivement sélectionnés.

Préférentiellement, ladite pondération est obtenue par modification des longueurs des paires d'électrodes de sortie.

Dans un mode de réalisation préférentiel de l'invention, lesdits moyens de stockage et de restitution comprennent une seconde ligne à retard analogique du type à onde de surface, présentant une entrée et une paire d'électrodes de sorties restituant le signal sélectionné après ledit retard prédéterminé sensiblement égal à une durée symbole.

Selon une variante avantageuse, lesdits moyens de stockage et de restitution constituent également des moyens de filtrage dudit signal sélectionné, en permettant le stockage de N portions successives dudit signal sélectionné, ledit filtrage consistant à restituer un signal filtré obtenu par addition desdites N portions successives.

De cette façon, les moyens de stockage et de restitution commencent à restituer un signal filtré dès qu'ils ont reçus une portion du signal sélectionné (c'est-à-dire après une fraction 1/N de la durée symbole). Puis, la qualité du filtrage est améliorée à chaque fois qu'une nouvelle portion du signal sélectionné est prise en compte, jusqu'à un filtrage optimal lorsque les N portions sont prises en compte.

Il est à noter que la qualité du filtrage peut encore être améliorée en augmentant le nombre de symboles de la séquence d'initialisation.

Avantageusement, chacune des N portions du signal sélectionné présente une durée sensiblement égale à la période Tₚ des porteuses de réception.

Ainsi, chaque portion contient une alternance du signal sélectionné.

Le filtre ainsi réalisé est un filtre transverse dont la durée d'établissement (ou temps de transfert) est égale à la durée symbole, et dont la fréquence centrale est la fréquence de la porteuse de référence, ce qui permet d'extraire cette porteuse de référence du bruit..

Un tel filtrage permet également de multiplier par N le gain sur le signal restitué par rapport au cas d'une simple restitution sans filtrage, après une durée symbole. En effet, chaque portion du signal restitué est obtenue par addition de N portions du signal sélectionné.

Avantageusement, chacune des N portions du signal sélectionné est affectée d'un coefficient de pondération.

De cette façon, il est possible de réaliser une fonction de filtrage plus complexe. Il convient toutefois, dans ce cas, de veiller à ce que la phase du signal filtré soit toujours égale à la phase du signal sélectionné.

Avantageusement, dans le cas de la variante discutée ci-dessus, lesdits moyens de stockage et de restitution comprennent une seconde ligne à retard analogique du type à onde de surface, présentant une entrée et une pluralité de paires d'électrodes de sorties délivrant lesdites N portions du signal sélectionné.

A nouveau, l'utilisation d'une ligne à retard analogique du type à onde de surface présente l'avantage d'une simplicité de mise en oeuvre.

Avantageusement, ladite porteuse de référence est une porteuse de réception directe, et en ce que lesdits seconds moyens de déphasage déphasent ladite porteuse de référence d'environ Tₚ/4, de façon à générer par retard l'autre desdites porteuses de réception, dite porteuse de réception en quadrature.

Selon une variante avantageuse, ladite porteuse de référence est une porteuse de réception en quadrature, et en ce que lesdits seconds moyens de déphasage déphasent ladite porteuse de référence d'environ 3.Tₚ/4, de façon à générer par retard l'autre desdites porteuses de réception, dite porteuse de réception directe.

Dans le cas de cette variante avantageuse, c'est-à-dire lorsque la porteuse de référence est la porteuse en quadrature, on peut imaginer plusieurs modes de réalisation avantageux des seconds moyens de déphasage (permettant d'obtenir la porteuse directe) :
- soit lesdits seconds moyens de déphasage comprennent une troisième ligne à retard analogique du type à onde de surface, présentant un retard de durée sensiblement égale à Tₚ/4, et des moyens d'inversion de signe.
- soit, lorsque les moyens de stockage et de restitution comprennent une seconde ligne à retard n'assurant pas une fonction complémentaire de filtrage, ladite seconde ligne à retard constitue également lesdits seconds moyens de déphasage, en présentant une paire d'électrodes de sortie supplémentaires inversée et décalée de Tₚ/4 par rapport à ladite paire d'électrodes de sortie.
- soit, lorsque les moyens de stockage et de restitution comprennent une seconde ligne à retard assurant une fonction complémentaire de filtrage, ladite seconde ligne à retard constitue également lesdits seconds moyens de déphasage, en présentant une pluralité de paires d'électrodes de sortie supplémentaires inversées et décalées de Tₚ/4 par rapport à ladite pluralité de paires d'électrodes de sortie.

Il est clair que l'homme du métier saura, sans sortir du cadre de l'invention, déduire de ces différents modes de réalisation des solutions adaptées au cas où la porteuse de référence est la porteuse directe et où il faut de décaler cette porteuse de Tp/4 pour obtenir la porteuse en quadrature.

L'invention concerne également un étage de démodulation d'un signal reçu modulé selon une modulation de phase à au moins deux états de phase, ledit signal reçu transportant au moins une série de symboles constituée d'une séquence d'initialisation d'au moins un symbole d'initialisation et d'une séquence utile d'au moins un symbole utile, ledit étage de démodulation comprenant un dispositif de génération de deux porteuses de réception tel que présenté ci-dessus.

Enfin, l'invention concerne aussi un procédé de génération de deux porteuses de réception possédant une même fréquence, dite fréquence porteuse fₚ = 1/Tₚ, et en quadrature de phase l'une par rapport à l'autre, ledit procédé étant destiné à être mis en oeuvre dans un étage de démodulation d'un signal reçu modulé selon une modulation de phase à au moins deux états de phase, ledit signal reçu transportant au moins une série de symboles constituée d'une séquence d'initialisation d'au moins un symbole d'initialisation et d'une séquence utile d'au moins un symbole utile, chaque symbole correspondant à un desdits états de phase,
ladite séquence d'initialisation étant connue dudit étage de démodulation, et ledit procédé comprenant les étapes suivantes:
- déphasage dudit signal reçu, de façon à générer une pluralité de signaux déphasés présentant chacun un déphasage distinct par rapport audit signal reçu ;
- sélection d'un signal, dit signal sélectionné, parmi ladite pluralité, en fonction :
   -- d'un état de phase prédéterminé associé audit symbole d'initialisation, pendant la réception de ladite séquence d'initialisation,
   -- d'un état de phase estimé par ledit étage de démodulation à partir du signal reçu, pendant la réception de ladite séquence utile,
de façon que ledit signal sélectionné constitue l'une desdites porteuses de réception, dite porteuse de référence ;
- stockage et de restitution du signal sélectionné, après un retard sensiblement égal à une durée symbole, de façon à délivrer ladite porteuse de référence ;
- déphasage de ladite porteuse de référence, de façon à générer l'autre desdites porteuses de réception.

D'autres caractéristiques et avantages de l'invention apparaîtront à la lecture de la description suivante d'un mode de réalisation préférentiel de l'invention, donné à titre d'exemple indicatif et non limitatif et des dessins annexés, dans lesquels :
- la figure 1 présente un schéma synoptique d'un exemple d'étage de démodulation comprenant un dispositif selon l'invention de génération de porteuses de réception ;
- la figure 2 montre un exemple de signal reçu transportant une série de symboles, ainsi que le signal correspondant restitué par les moyens de stockage et de restitution apparaissant sur la figure 1 ;
- la figure 3 présente une constellation d'états d'amplitude-phase d'une modulation 16 QAM selon laquelle peut être modulé le signal reçu par l'étage de démodulation de la figure 1 ;
- la figure 4 illustre un exemple d'état d'amplitude-phase correspondant à un choix de symbole d'initialisation ;
- la figure 5 présente un mode de réalisation particulier des premiers moyens de déphasage apparaissant sur la figure 1 ;
- les figures 6 à 8 présentent chacune un mode de réalisation distinct des moyens de stockage et de restitution apparaissant sur la figure 1 ;
- la figure 9 présente un organigramme du procédé selon l'invention de génération de porteuses de réception.

L'invention concerne donc un dispositif et un procédé de génération de deux porteuses de réception utilisées pour la démodulation de phase à au moins deux états de phase.

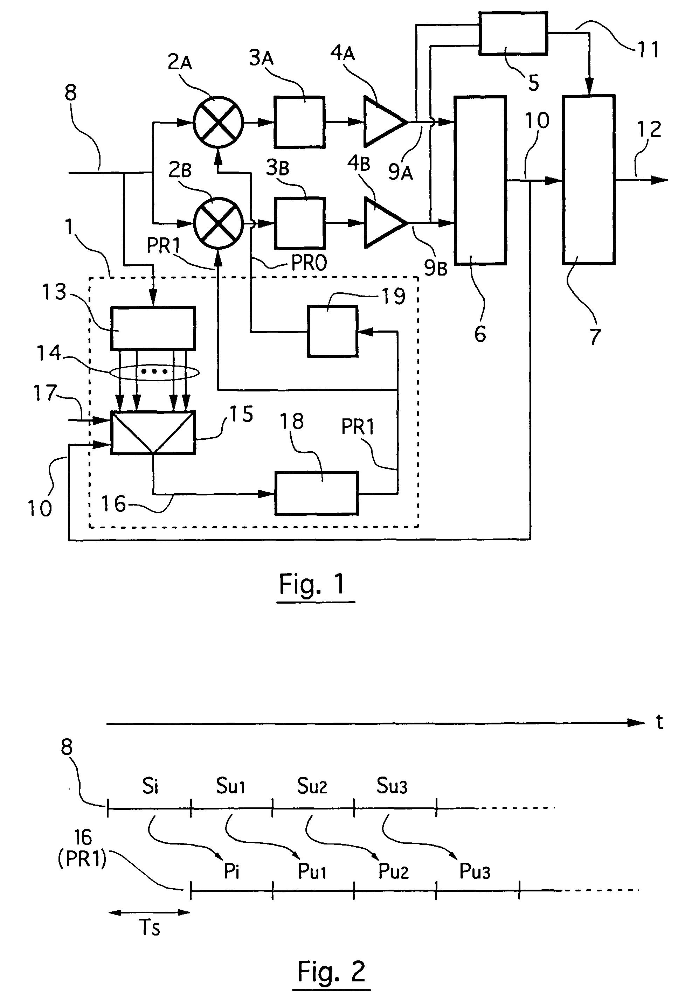

La figure 1 présente un schéma synoptique d'un exemple d'étage de démodulation comprenant un dispositif 1 selon l'invention de génération de deux porteuses de réception PR0, PR1.

L'invention réside dans la façon de générer ces porteuses de réception PR0, PR1, et non pas dans leur utilisation, qui elle est tout à fait classique.

Ces porteuses de réception PR0, PR1 doivent posséder une même fréquence (dite fréquence porteuse) fp = 1/T_{P}, et être en quadrature de phase l'une par rapport à l'autre. Dans la suite de la description, on considère que PR0 est la porteuse directe et PR1 est la porteuse en quadrature.

On rappelle maintenant, en se référant à la figure 1, la structure et le fonctionnement d'un exemple d'étage de démodulation de phase.

L'étage de démodulation comprend notamment des moyens 2_{A}, 2_{B} de multiplication, des moyens 3_{A}, 3_{B} de filtrage passe-bas, des moyens 4_{A}, 4_{B} de comparaison, des moyens 5 de récupération du rythme de démodulation, des moyens 6 de décision et des moyens 7 d'échantillonnage.

L'étage de démodulation reçoit un signal 8 modulé selon une modulation de phase à au moins deux états de phase.

Ce signal reçu 8 est multiplié (2_{A}, 2_{B}) d'une part par la porteuse directe PR0 et d'autre part par la porteuse en quadrature PR1. Chacun des produits obtenus en sortie des multiplieurs 2_{A}, 2_{B} est filtré (3_{A}, 3_{B}) puis comparé (4_{A}, 4_{B}) à un seuil prédéterminé. Les résultats 9_{A}, 9_{B} de ces comparaisons sont fournis :
- aux moyens 6 de décision, qui en déduisent un état de phase estimé 10 correspondant au signal reçu 8,
- aux moyens 5 de récupération du rythme de démodulation, qui génèrent un signal d'horloge (ou rythme de démodulation) 11 de période égale à la durée symbole T_{S} (ou temps-baud).

L'état de la phase estimé 10 en sortie des moyens 6 de décision est échantillonné (7) selon le rythme de démodulation 11, de façon à générer une série de symboles reçus 12.

Généralement, la génération des porteuses de réception directe et en quadrature est réalisée par un oscillateur local contrôlé par une boucle de récupération de la fréquence porteuse, la convergence de cette boucle n'étant possible que par la prise en compte d'informations d'avance ou de retard de porteuse fournies par les moyens 5 de récupération de rythme.

Le dispositif selon l'invention permet de générer les porteuses de réception PR0, PR1 sans oscillateur local, ni boucle de récupération de la fréquence porteuse. Pour cela, le signal reçu transporte au moins une série de symboles constituée de :
- une séquence d'initialisation comprenant au moins un symbole d'initialisation ; et
- une séquence utile comprenant au moins un symbole utile.

L'invention est particulièrement intéressante dans le cas d'une transmission en mode paquet. En effet, dans un tel mode de transmission, chaque série de symboles est assez courte (on parle alors de paquet de symboles) et doit être synchronisée. L'invention, en permettant une synchronisation grâce à un seul symbole d'initialisation, permet d'optimiser le rapport entre le nombre de symboles utiles par paquet et le nombre total de symboles par paquet.
- des premiers moyens 13 de déphasage générant, à partir du signal reçu 8, une pluralité de signaux déphasés 14 présentant chacun un déphasage distinct par rapport au signal-des moyens 15 de sélection d'un signal, dit signal sélectionné 16, parmi la pluralité de signaux déphasés 14, en fonction :
   -- d'un état de phase prédéterminé 17 associé au symbole d'initialisation, pendant la réception de la séquence d'initialisation ;
   -- d'un état de phase estimé à 10 par les moyens 6 de décision, pendant la réception de la séquence utile,
   de façon que le signal sélectionné 16 constitue l'une des porteuses PR0, PR1 de réception, dite porteuse de référence (à savoir PR1 dans l'exemple de la figure 1). Il est clair cependant que l'invention conceme également le cas où la porteuse de référence est PR0, et où PR1 est déduite de PR0 ;
- des moyens 18 de stockage et de restitution du signal sélectionné 16, après un retard sensiblement égal à une durée symbole T_{S}, de façon à délivrer la porteuses de référence PR1 ;
- des seconds moyens le générant, à partir de la porteuse de référence PR1, l'autre porteuse de réception PR0.

La figure 2 présente un exemple de signal reçu 8 et le signal sélectionné 16 correspondant. Le signal reçu 8 transporte une série de symboles constituée d'un symbole d'initialisation Sᵢ et plusieurs symboles utiles Su₁ à Su₃. Le signal sélectionné PR1 transporte une série de portions de signal Pᵢ, Pu₁ à Pu₃. Chaque portion du signal sélectionné PR1 est une portion du signal reçu 8 qui a été déphasée et stockée pendant une durée symbole Ts.

La suite de la description concerne une démodulation QAM à 16 états d'amplitude-phase. Il est clair que l'invention n'est pas limitée à cet exemple de démodulation mais concerne plus généralement toutes les démodulations de phases à au moins deux états de phase (à savoir toutes les démodulations MDP et QAM).

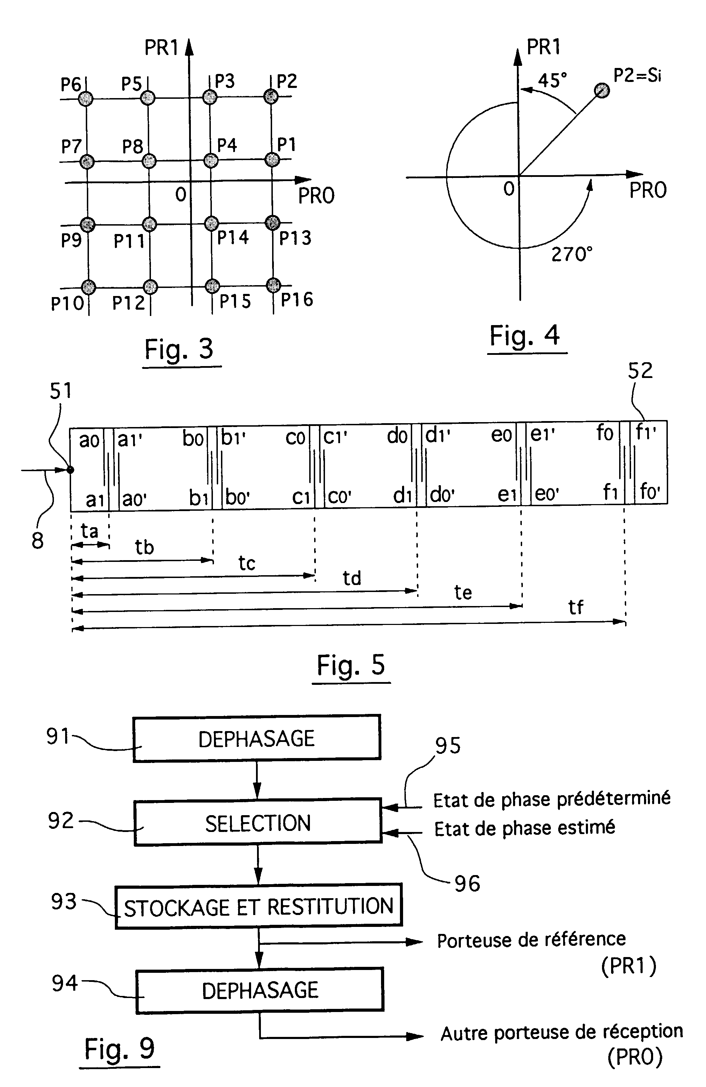

La figure 3 présente une constellation de points P1 à P16 correspondant aux états d'amplitude-phase d'une modulation 16 AQM.

Chaque points P1 à P 16, qui correspond à un symbole possible distinct, est défini par ses coordonnées dans le repère (0, PR0, PR1), où PR0 et PR1, les porteuses de réception directe (phase nulle) et en quadrature phase 90°), sont les vecteurs de base du repère.

Afin que le signal sélectionné 16 possède une phase identique à la porteuse de réception choisie (arbitrairement) comme porteuse de référence, les moyens 15 de sélection reçoivent une information leur indiquant l'état de phase que possède la portion de signal 8 (de durée Ts) en cours de réception.

Le symbole d'initialisation Sᵢ, à savoir le premier symbole de la série, est un symbole prédéterminé 17 connu du dispositif 1, et fourni aux moyens 15 de sélection. De cette façon, les moyens 15 de sélection savent de quelle quantité doit être déphasé le signal reçu 8 pour constituer le signal sélectionné 16.

Les symboles suivants Su₁ à Su₃ de la série ne sont pas connus du dispositif 1 puisqu'ils transportent des données utiles. Mais la portion de signal reçu 8 correspondant à chacun de ces symboles Su₁ à Su₃ peut être démodulée à sa réception par le dispositif 1 puisque celui-ci dispose à ce moment des deux porteuses de références PR0, PR1. Une telle démodulation d'une portion de signal revient à estimer quel état de phase 10 possède cette portion de signal, c'est-à-dire à quel point de la constellation elle correspond. Finalement, dès lors que l'état de phase est estimé, les moyens 15 de sélection savent de quelle quantité doit être déphasé la portion de signal reçu 8 pour constituer une portion de signal sélectionné 16 (c'est-à-dire être en phase avec la porteuses de référence).

A titre d'exemple, on peut supposer que le symbole d'initialisation Sᵢ correspond au point P2 (cf figure 4) et que la porteuse de réception de référence est PR1.

Dans ce cas, pendant la réception du symbole d'initialisation (première durée symbole), le signal sélectionné 16 est celui qui, parmi la pluralité 14 de signaux déphasés possibles, correspond au signal reçu 8 déphasé de 45°.

Pendant la réception de chaque symbole utile Su₁ à Su₃ (seconde, troisième, etc durée symbole), le signal reçu 8 est démodulé (grâce aux porteuses de réception PR0, PR1 déduites du signal sélectionné pendant la durée symbole précédente) et un état de phase correspondant 10 est estimé.

C'est la connaissance de cet état de phase estimé 10, dont la valeur peut varier dans le temps, qui permet de savoir quel déphasage doit présenter le signal sélectionné 16 par rapport au signal reçu pour être effectivement en phase avec la porteuse de réception de référence (PR1 dans cet exemple). Par exemple, si le premier symbole utile Su₁ est associé au point P6, le signal sélectionné 16 correct est celui qui correspond au signal reçu 8 déphasé de 315°.

Pendant une même durée symbole, le signal sélectionné 16 peut correspondre à plusieurs signaux déphasés "incorrects" avant de correspondre au signal déphasé "correct". En effet, ce ou ces choix de signaux déphasés incorrects correspondent au passage non instantané de l'état de phase estimé précédent au nouvel état de phase estimé.

Par exemple, si le second symbole utile Su₂ est associé au point P16, le signal sélectionné 16 correct est celui qui correspond au signal reçu 8 déphasé de 135°. Dans ce cas, si les moyens 6 de décision estiment le point P10 avant d'estimer le point P16, les moyens 15 de sélection sélectionnent un signal déphasé incorrect qui correspond au signal reçu 8 déphasé de 225°.

Une telle convergence du signal sélectionné 16 vers sa valeur correcte n'est pas gênante si elle est suffisamment rapide vis-à-vis de la durée symbole Ts.

Il est à noter que cet état de phase estimé 10 pouvant varier dans le temps (notamment au début de la durée symbole), c'est sa valeur à l'instant d'échantillonnage (instant déterminé par le rythme de démodulation 11 et qui est l'instant final de la durée symbole) qui est retenue pour constituer l'état de phase associé à la portion de signal reçu pendant cette durée symbole.

Dans un mode de réalisation particulier (cf la figure 5), les premiers moyens 13 de déphasage comprennent une première ligne à retard analogique du type à onde de surface 52. Cette première ligne à retard 52 présente une entrée 51 et une pluralité de paires d'électrodes de sortie {(a0, a1), (a1', a0'),..., (f0, f1), (f1', f0')}. Chaque paire d'électrodes de sortie délivre un des signaux déphasés 14 dont le déphasage est fonction de la distance entre l'entrée 51 et les électrodes de la paire.

Dans le cas d'une démodulation MAQ 16, il existe 12 déphasages différents entre les 16 points et la porteuse de référence (par exemple PR1). En effet, il existe quatre couples de points de même phase (P6, P8), (P10, P11), (P14, P16), (P2, P6).

Afin de réduire la longueur physique de la première ligne à retard 52, on peut jouer sur la symétrie de la constellation par rapport au centre du repère. Ainsi, les points P5, P6, P7, P9, P10, P12 sont obtenus, par symétrie, à partir des points P15, P16, P13, P1, P2, P3 respectivement. Ce déphasage de 180° correspond à une inversion de signe qui est effectuée, sur la ligne à retard 52, par duplication des électrodes. Ainsi, par exemple, la tension aux bornes des électrodes (a0, a1) est inverse de celle présente aux bornes des électrodes (a1', a0'), et ces deux paires d'électrodes sont placées suffisamment proches l'une de l'autre pour que le retard entre les signaux disponibles sur ces deux sorties soit négligeable.

Dans l'exemple précédent, il suffit de 6 pas de retard (associés chacun à deux sorties inversées l'une par à l'autre) présentant un déphasage égal à :
tₐ = 18,44 ° = 0,052.Tₚ, pour le point P3 ;
t_{b} = 45° = 0,125.Tₚ, pour le point P2 ;
t_{c} = 71,56° = 0,198.Tₚ, pour le point P1 ;
t_{d} = 108,44° = 0,3012.Tₚ, pour le point P1 3 ;
tₑ = 135° = 0,375.Tₚ, pour le point P16;
t_{f}= 161,56° = 0,448.Tₚ, pour le point P15.

Afin que le signal sélectionné 16 présente une amplitude sensiblement constante, le dispositif 1 peut également comprendre des moyens de pondération de chacun des signaux déphasés 14 générés par les moyens 13 de déphasage.

Dans le repère (0, PR0, PR1), à chaque point Pᵢ, i ∈ [1,16], de la constellation peut être associé un vecteur (0, Pᵢ) de module Pᵢ . Par exemple, si l'on considère les niveaux d'amplitude (-3, -1, +1, +3), on a :
P3= P1= √10/3 P2= √2 P3 = √2/3.

La pondération peut alors consister à multiplier chaque signal déphasé associé à un point Pi par l'inverse du module correspondant A/Pᵢ.

Une telle pondération peut être obtenue, dans l'exemple de la figure 5, par modification des longueurs des paires d'électrodes de sortie.

Il est à noter que si l'amplitude du signal sélectionné 16 n'est pas sensiblement constante, il est préférable de placer des limiteurs de tension (pour les porteuses de réception PR0, PR1), en amont des moyens 2_{A}, 2_{B} de multiplication.

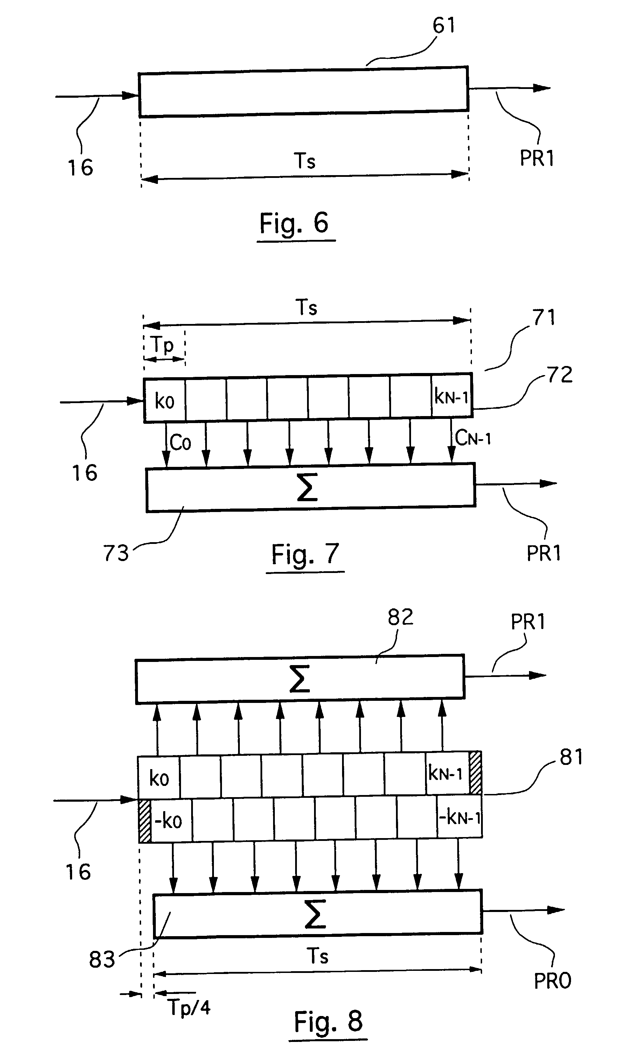

Les figures 6 à 8 présentent chacune un mode de réalisation distinct des moyens 18 de stockage et de restitution apparaissant sur la figure 1.

Dans un premier mode de réalisation (cf figure 6), les moyens 18 de stockage et de restitution sont constitués d'une seconde ligne à retard 61 analogique du type à onde de surface, induisant un retard sensiblement égal à une durée symbole Ts.

Dans les second et troisième modes de réalisation (cf figures 7 et 8), les moyens 18 de stockage constituent également des moyens de filtrage du signal sélectionné 16.

Ainsi, dans le second mode de réalisation (cf figure 7), les moyens 71 de stockage et de restitution permettent le stockage de N portions successives k₀ à k_{N-1} (de durée Tₛ/N) du signal sélectionné 16, et le filtrage consiste à prendre comme signal restitué (et donc porteuse de référence PR1) la somme (73) des N portions successives.

On prend de préférence des portions de signal k₀ à k_{N-1} de durée sensiblement égale à la période Tₚ des porteuses de réception (Tₛ/N = Tₚ). Ainsi, on obtient un filtre transverse de bande étroite autour de la fréquence porteuse fₚ.

Chacune des N portions k₀ à k_{N-1} peut être affectée d'un coefficient de pondération c₀ à c_{N-1}, de façon à réaliser des fonctions de filtrage plus complexe. Il convient alors de s'assurer que la phase du signal sélectionné est conservée.

Les moyens 7 de stockage et de filtrage selon ce second mode de réalisation comprennent par exemple une seconde ligne à retard analogique du type à onde de surface 72. Cette ligne à retard 72 peut présenter une entrée et une pluralité de paires d'électrodes de sortie délivrant les N portions du signal sélectionné (éventuellement pondérées).

Dans la présente description, on considère que la porteuse de référence est la porteuse de réception en quadrature PR1, et la porteuse de réception directe PR0 est déduite de PRI par retard de 3.T_{P}/4. La suite de la description concerne divers modes de réalisation des seconds moyens 19 de déphasage permettant de générer PR0 à partir de PR1.

Il est clair cependant que l'invention concerne également le cas où la porteuse de référence est la porteuse de réception directe PR0, et la porteuse de réception en quadrature PR1 est déduite de PR0 par retard de T_{P}/4.

Avec PR1 comme porteuse de référence, les seconds moyens 19 de déphasage peuvent comprendre une troisième ligne à retard analogique du type à onde de surface, présentant un retard de durée sensiblement égale à T_{P}/4 et des moyens d'inversion de signe. L'inversion de signe est équivalente à un retard de T_{P}/2, on a un retard total : R_{T} = T_{P}/2 + T_{P}/4 = 3.T_{P}/4.

Selon une variante, lorsque les moyens 18 de stockage et de restitution sont constitués d'une seconde ligne à retard 61 (cf figure 6), on utilise cette seconde ligne à retard pour réaliser les seconds moyens de déphasage. Ceci est par exemple réalisé en ajoutant une paire d'électrodes de sortie PR0, inversée et décalée de T_{P}/4 par rapport à la paire de sortie générant PR1.

Selon une autre variante illustrée sur la figure 8, lorsque les moyens 18 de stockage et de restitution sont constituées d'une seconde ligne à retard 81 jouant également un rôle de filtre (cf figure 7), on utilise cette seconde ligne à retard pour réaliser les seconds moyens de déphasage.

La seconde ligne à retard 81 présente une première pluralité de paires d'électrodes délivrant N portions k₀ à k_{N-1} du signal sélectionné 16 (éventuellement pondérées) dont la somme (82) constitue la porteuse de référence PR1 filtrée. Elle présente aussi une seconde pluralité de paires d'électrodes, inversée et décalée de T_{P}/4 par rapport à la première, délivrant N portions inversées - k₀ à - k_{N-1} du signal sélectionné 16 (éventuellement pondérées) dont la somme (83) constitue la porteuse de réception PR0 filtrée.

Le mode de réalisation du dispositif selon l'invention de génération de porteuses de réception PR0, PR1 qui est décrit ci-dessus est réalisé essentiellement avec des composants du type analogique. Il convient toutefois de noter que des composants du type numérique (processus de signaux numériques, mémoires, pointeurs de lecture et d'écriture, échantillonneurs, convertisseurs analogique/numérique, etc) peuvent également être utilisés pour réaliser le dispositif de l'invention.

La figure 9 présente un organigramme du procédé de génération de porteuses de réception PR0, PR1 selon l'invention. Ce procédé comprend les étapes suivantes :
- déphasage 91 du signal reçu 8, de façon à générer une pluralité de signaux déphasés 14 ;
- sélection 92 d'un signal, dit signal sélectionné 16, parmi la pluralité 14, en fonction :
   -- d'un état de phase prédéterminé 95 associé au symbole d'initialisation Sᵢ, pendant la réception de la séquence d'initialisation;
   -- d'un état de phase estimé 96, pendant la réception de la séquence utile ; de façon que le signal sélectionné 16 constitue la porteuse de référence PR1 ;
      - stockage et restitution 93 du signal sélectionné 16 constituant la porteuse de référence (PR1 par exemple), après un retard sensiblement égal à une durée symbole Ts ;
      - déphasage 94 de la porteuse de référence de façon à générer l'autre porteuse de réception (PR0 par exemple).

## Revendications

1. Dispositif de génération de deux porteuses de réception (PR0, PR1) possédant une même fréquence, dite fréquence porteuse fₚ = 1/Tₚ, et en quadrature de phase l'une par rapport à l'autre, ledit dispositif étant destiné à être intégré dans un étage de démodulation d'un signal reçu (8) modulé selon une modulation de phase à au moins deux états de phase (P1 à P16), ledit signal reçu (8) transportant au moins une série de symboles constituée d'une séquence d'initialisation d'au moins un symbole d'initialisation (Si) et d'une séquence utile d'au moins un symbole utile (Su₁ à Su₃), chaque symbole correspondant à un desdits états de phase,
caractérisé en ce que ladite séquence d'initialisation est connue dudit dispositif (1), et en ce que ledit dispositif (1) comprend :
- des premiers moyens (13) de déphasage générant, à partir dudit signal reçu (8), une pluralité de signaux déphasés (14) présentant chacun un déphasage distinct par rapport audit signal reçu;
- des moyens (15) de sélection d'un signal, dit signal sélectionné (16), parmi ladite pluralité (14), en fonction :
-- soit d'un état de phase prédéterminé (17) associé audit symbole d'initialisation (Si), pendant la réception de ladite séquence d'initialisation,
-- soit d'un état de phase estimé (10) par ledit étage de démodulation à partir du signal reçu (8), pendant la réception de ladite séquence utile,
de façon que ledit signal sélectionné (16) constitue l'une desdites porteuses de réception, dite porteuse de référence (PR1) ;
- des moyens (18) de stockage et de restitution du signal sélectionné (16), après un retard sensiblement égal à une durée symbole (Ts), de façon à délivrer ladite porteuse de référence (PR1) ;
- des seconds moyens (19) de déphasage générant, à partir de ladite porteuse de référence (PR1), l'autre desdites porteuses de réception (PR0).

2. Dispositif selon la revendication 1, caractérisé en ce que ledit déphasage distinct que présente chaque signal déphasé (14) par rapport au signal reçu (8) est égal au déphasage entre un desdits états de phase possibles (P1 à P16) et ladite porteuse de référence (PR1).

3. Dispositif selon l'une quelconque des revendications 1 et 2, caractérisé en ce que lesdits premiers moyens (13) de déphasage comprennent une première ligne à retard analogique (52) du type à onde de surface, présentant une entrée (51) et une pluralité de paires d'électrodes de sorties ((a0, a1), ..., (f1', f0')) délivrant ladite pluralité de signaux déphasés (14), chaque paire d'électrodes de sortie délivrant un desdits signaux déphasés présentant un déphasage fonction de la distance entre ladite entrée et lesdites électrodes.

4. Dispositif selon l'une quelconque des revendications 1 à 3, ladite modulation de phase étant combinée à une modulation d'amplitude, de façon à constituer une modulation d'amplitude en quadrature (MAQ) possédant une pluralité d'états d'amplitude-phase possibles (P1 à P16),
caractérisé en ce que ledit dispositif (1) comprend des moyens de pondération de chacun des signaux déphasés générés par les premiers moyens (13) de déphasage, de façon que ledit signal sélectionné (16) présente une amplitude sensiblement constante dans le temps, quels que soient les signaux déphasés successivement sélectionnés.

5. Dispositif selon les revendications 3 et 4, caractérisé en ce que ladite pondération est obtenue par modification des longueurs des paires d'électrodes de sortie ((a0, a1), ..., (f1', f0')).

6. Dispositif selon l'une quelconque des revendications 1 à 5, caractérisé en ce que lesdits moyens (18) de stockage et de restitution comprennent une seconde ligne à retard analogique (61) du type à onde de surface, présentant une entrée et une paire d'électrodes de sorties restituant le signal sélectionné (16) après ledit retard prédéterminé sensiblement égal à une durée symbole (Ts).

7. Dispositif selon l'une quelconque des revendications 1 à 5, caractérisé en ce que lesdits moyens (18) de stockage et de restitution constituent également des moyens de filtrage dudit signal sélectionné (16), en permettant le stockage de N portions successives (k₀ à k_{N-1}) dudit signal sélectionné, ledit filtrage consistant à restituer un signal filtré obtenu par addition (73) desdites N portions successives.

8. Dispositif selon la revendication 7, caractérisé en ce que chacune des N portions du signal sélectionné présente une durée (Ts/N) sensiblement égale à la période Tₚ des porteuses de réception (PR0, PR1).

9. Dispositif selon l'une quelconque des revendications 7 et 8, caractérisé en ce que chacune des N portions (k₀ à k_{N-1}) du signal sélectionné (16) est affectée d'un coefficient de pondération (c₀ à c_{N-1}).

10. Dispositif selon l'une quelconque des revendications 7 à 9, caractérisé en ce que lesdits moyens (18) de stockage et de restitution comprennent une seconde ligne à retard analogique (71) du type à onde de surface, présentant une entrée et une pluralité de paires d'électrodes de sorties délivrant lesdites N portions (k₀ à k_{N-1}) du signal sélectionné (16).

11. Dispositif selon l'une quelconque des revendications 1 à 10, caractérisé en ce que ladite porteuse de référence est une porteuse de réception directe (PR0), et en ce que lesdits seconds moyens (19) de déphasage déphasent ladite porteuse de référence (PRO) d'environ Tₚ/4, de façon à générer par retard l'autre desdites porteuses de réception, dite porteuse de réception en quadrature (PR1).

12. Dispositif selon l'une quelconque des revendications 1 à 10, caractérisé en ce que ladite porteuse de référence est une porteuse de réception en quadrature (PR1), et en ce que lesdits seconds moyens (19) de déphasage déphasent ladite porteuse de référence (PR1) d'environ 3.Tₚ/4, de façon à générer par retard l'autre desdites porteuses de réception, dite porteuse de réception directe (PR0).

13. Dispositif selon la revendication 12, caractérisé en ce que lesdits seconds moyens (19) de déphasage comprennent une troisième ligne à retard analogique du type à onde de surface, présentant un retard de durée sensiblement égale à Tₚ/4, et des moyens d'inversion de signe.

14. Dispositif selon les revendications 6 et 12, caractérisé en ce que ladite seconde ligne à retard (61) constitue également lesdits seconds moyens de déphasage, en présentant une paire d'électrodes de sortie supplémentaires inversée et décalée de Tₚ/4 par rapport à ladite paire d'électrodes de sortie.

15. Dispositif selon les revendications 10 et 12, caractérisé en ce que ladite seconde ligne à retard (81) constitue également lesdits seconds moyens de déphasage, en présentant une pluralité de paires d'électrodes de sortie supplémentaires inversées et décalées de Tₚ/4 par rapport à ladite pluralité de paires d'électrodes de sortie.

16. Etage de démodulation d'un signal reçu (8) modulé selon une modulation de phase à au moins deux états de phase, ledit signal reçu transportant au moins une série de symboles constituée d'une séquence d'initialisation d'au moins un symbole d'initialisation (Si) et d'une séquence utile d'au moins un symbole utile (Su₁ à Su₃),
caractérisé en ce qu'il comprend un dispositif (1) de génération de deux porteuses de réception (PR0, PR1) selon l'une quelconque des revendications 1 à 15.

17. Procédé de génération de deux porteuses de réception (PR0, PR1) possédant une même fréquence, dite fréquence porteuse fₚ = 1/Tₚ, et en quadrature de phase l'une par rapport à l'autre, ledit procédé étant destiné à être mis en oeuvre dans un étage de démodulation d'un signal reçu (8) modulé selon une modulation de phase à au moins deux états de phase, ledit signal reçu transportant au moins une série de symboles constituée d'une séquence d'initialisation d'au moins un symbole d'initialisation (Si) et d'une séquence utile d'au moins un symbole utile (Su₁ à Su₃), chaque symbole correspondant à un desdits états de phase,
caractérisé en ce que ladite séquence d'initialisation est connue dudit étage de démodulation, et en ce que ledit procédé comprend les étapes suivantes:
- déphasage (91) dudit signal reçu, de façon à générer une pluralité de signaux déphasés présentant chacun un déphasage distinct par rapport audit signal reçu ;
- sélection (92) d'un signal, dit signal sélectionné, parmi ladite pluralité, en fonction :
-- d'un état de phase prédéterminé (95) associé audit symbole d'initialisation, pendant la réception de ladite séquence d'initialisation,
-- d'un état de phase estimé (96) par ledit étage de démodulation à partir du signal reçu, pendant la réception de ladite séquence utile,
de façon que ledit signal sélectionné constitue l'une desdites porteuses de réception, dite porteuse de référence ;
- stockage et de restitution (93) du signal sélectionné, après un retard sensiblement égal à une durée symbole, de façon à délivrer ladite porteuse de référence (PR1) ;
- déphasage (94) de ladite porteuse de référence (PR1), de façon à générer l'autre desdite porteuses de réception (PR0).
